# EUROPEAN PATENT APPLICATION

(11) **EP 1 615 464 A1**
(43) Date of publication of application: **11.01.2006**
(21) Application number: 04103212.9
(22) Date of filing: 07.07.2004
(51) Int. Cl.: H04R 5/02

(54) **Method and device for producing multichannel audio signals**

(71) Applicant: Sony Ericsson Mobile Communications AB, 221 88 Lund (SE)
(72) Inventor: Thijssen, Jeroen, 230 40 Bara (SE)
(74) Representative: Akerman, Marten Lennart

(57) **Abstract**

The invention relates to a method and device for producing multichannel audio, e.g. sound reproduction in stereo, using interconnected mobile devices. One mobile device (1) is the master device containing the audio player itself and the other mobile device (1) is a slave device just receiving one channel of audio and reproducing the sound therefrom. The mobile devices are suitably interconnected by radio, e.g. by means of a Bluetooth™ link.

## Description

### Field of the invention

The present invention relates to a method and device for producing multichannel audio, e.g. sound reproduction in stereo, using interconnected mobile devices. The mobile devices are suitably interconnected by radio, e.g. by means of a Bluetooth™ link.

### State of the art

Today mobile devices such as mobile phones often contain audio players having the capacity to play multichannel audio, particularly sound in stereo. The user can listen to the music in stereo by means of a headset but it is not possible to obtain a perceived stereo reproduction with the loudspeaker or loudspeakers in the mobile device itself as it is necessary to reproduce the sound at two speakers separated by a distance greater than the dimensions of the device itself. It is not desired to carry another separate speaker or a desk stand with two separate speakers connected to the mobile device.

### Summary of the invention

The present inventor has realised that the sound quality of one mobile device is sufficiently good and it would be possible to get multichannel audio by interconnecting two or more such mobile devices. One mobile device would be the master device containing the audio player itself and the other mobile device would be a slave device just receiving one channel of audio and reproducing the sound therefrom.

In a first aspect the invention provides a method for producing multichannel audio, comprising the steps of:
playing back a sound track containing multichannel audio from an audio player located in a master device;
separating one channel of the multichannel audio;
reproducing the sound of the separated one channel of the multichannel audio locally in the master device;
transmitting the other channels of the multichannel audio to remote slave devices, each channel to a separate slave device;
reproducing the sound of each of the other channels remotely, each in its respective separate slave device.

Preferably, the other channels of the multichannel audio are transmitted by means of a radio link, suitably a Bluetooth™ link.

In one embodiment, the sound reproduction is calibrated with regard to a delay in the radio transmission.

The calibration may be performed by transmitting a calibration signal over the radio link, reproducing the sound of the calibration signal at a remote slave device, picking up the sound of the calibration signal at the local master device, measuring the delay between the original calibration signal and the sound of the calibration signal, and delaying the local sound reproduction of the separated one channel in the master device.

In one embodiment, the calibration involves a plurality of slave devices and the local sound reproduction is delayed with an average of the measured delays.

In another embodiment, the calibration involves a plurality of slave devices and the respective local sound reproduction is delayed with a value based on delays measured individually for each slave device

Suitably, the determination of what channels of the multichannel audio are to be separated in the master device and to be transmitted to the respective slave devices, is performed in dependence of the relative physical location between the master device and the slave devices.

The multichannel audio may consist of left and right stereo channels, wherein the left channel is reproduced by the master device and the right channel is reproduced by a slave device, or vice versa.

In one embodiment, the relative physical location between the master device and the slave devices is determined by the master device, and the distribution of the channels to the respective devices is arranged automatically.

In a second aspect the invention provides a device for producing multichannel audio, comprising: a player for playing back a sound track containing multichannel audio.

According to the invention the device further comprises:
a control means for separating one channel of the multichannel audio;
a sound reproduction system for reproducing the sound of the separated one channel of the multichannel audio;
transmission means for transmitting the other channels of the multichannel audio to remote slave devices.

Preferably, the transmission means comprises a radio link, suitably a Bluetooth™ link.

In one embodiment, the device further comprises a calibration means for calibration of the sound reproduction with regard to a delay in the radio transmission.

Suitably, the calibration means is adapted to perform the calibration by transmitting a calibration signal over the radio link, whereby the sound of the calibration signal is reproduced at a remote slave device, picking up the sound of the calibration signal, measuring the delay between the original calibration signal and the sound of the calibration signal, and delaying the sound reproduction of the separated one channel.

In one embodiment, the calibration means is adapted to involve a plurality of slave devices and the local sound reproduction is delayed with an average of the measured delays.

In another embodiment, the calibration means is adapted to involve a plurality of slave devices and the local sound reproduction is delayed with a value based on delays measured individually for each slave device.

Suitably, the control means is adapted to be set to select what channels of the multichannel audio are to be separated and to be transmitted to the respective slave devices.

The multichannel audio may consist of left and right stereo channels, wherein the control means is adapted to be set to separate the left channel and to transmit the right channel to a slave device, or vice versa.

In one embodiment, the master device is adapted to determine the relative physical location between the master device and the slave devices, and to arrange the distribution of the channels to the respective devices automatically

Preferably, the device comprises reception means adapted to receive one channel of the multichannel audio, and the control means is adapted to command the sound reproduction system to reproduce the sound of the received one channel.

Preferably, the reception means comprises a radio link suitably a Bluetooth™ link.

The device may be an audio player, a portable telephone, a pager, a communicator, a smart phone or an electronic organiser.

### Brief description of the drawings

The invention will be described below with reference to the accompanying drawings of which:
fig. 1 is a schematic drawing of two co-operating mobile devices for reproducing multichannel audio according to the invention, and
fig. 2 is a block diagram of relevant units of the mobile device.

### Detailed description of preferred embodiments

The invention is described in connection with mobile telephones, which today often contain audio players and radio links for communication with peripheral equipment. However, the invention is equally applicable to other mobile devices such as audio players as such, pagers, communicators, smart phones and electronic organisers. As mentioned in the introduction, such mobile devices often have a good sound reproduction system and have the capacity of playing multichannel audio but are only provided with one loudspeaker or several closely spaced loudspeakers.

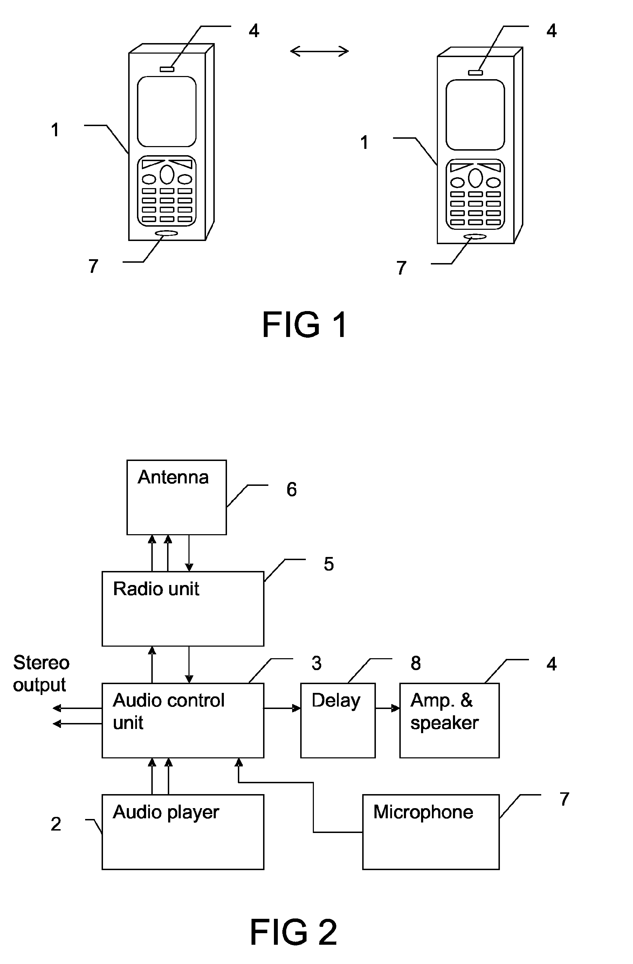

In the present invention two mobile devices are interconnected. In fig. 1 two mobile telephones 1 are interconnected by means of radio, suitably by means of a short range Bluetooth™ radio link. One of the mobile phones is the master device containing the audio player and reproducing one channel, while the other channel is transmitted by radio to the slave mobile device reproducing the other channel. Thus, music can be played in true stereo over their speakers 4. The system may be expanded to more channels as in case of a multichannel surround sound system. In this case, all channels but one are transmitted to slave units for reproduction.

In case of two identical mobile phones, such as the mobile phones 1 shown in fig. 1, the roles are inter-changeable. That is, both mobile phones may contain audio players but only that of the master unit is used while the other is receiving a channel only. Within the scope of the invention it is also conceivable to provide a mobile device that is only a slave loudspeaker communicating with a master device.

Fig. 2 shows the relevant units in a master device for implementing the invention. In case of a mobile phone, the device of course contains a lot of other units which do not form part of the present invention. The device is provided with an audio player 2 capable of playing multichannel sound tracks contained in audio files, e.g. MP3 files and the like. The audio player 2 may also be connected to a FM receiver and/or a television receiver. The audio channels are symbolised by arrows, of which single arrows represent a mono channel and multiple arrows represent multiple channels. The multichannel audio is received by an audio control unit 3. As is conventional, the control unit 3 may combine the audio channels into a mono channel and send to the sound reproduction system 4 containing amplifiers and at least one speaker. The audio control unit 3 may also be provided with a stereo output, e.g. to a headset or to another stereo sound reproduction system.

However, according to the present invention only one channel of the multichannel audio is sent to the local speaker system 4. The audio control unit 3 separates one of the channels of the multichannel audio. This channel is to be reproduced locally in the master unit. The audio control unit 3 sends the remainder of the channels to a radio unit 5, e.g. a Bluetooth™ link unit. The remote channels are transmitted from an antenna 6 to be reproduced remotely at slave devices.

A slave mobile device may in principle comprise the same units as the master unit. However, when the device is set in slave mode the audio player 2 is not active. The slave device just receives one channel by means of its antenna 6 and radio unit 5. The audio control unit 3 receives this one channel and forwards it to the amplifier and speaker 4 for "remote" sound reproduction, but, of course, local to the slave device.

To enhance the multichannel sound reproduction the master device may be calibrated in order to account for possible delays in the radio link. The calibration is suitably performed before the player is started to play music.

The calibration is performed by the audio control unit 3 as follows. The audio control unit 3 generates a tone signal which is transmitted via the radio unit 5 and antenna 6 to a slave device. The slave device in turn plays back the tone signal over its sound reproduction system. This sound is picked up by a microphone 7 in the master device. This sound now contains the delay caused by the radio link of the master device and the slave device (and any other possible delays, including acoustic delays in the air).

The audio control unit 3 receives the sound signal from the microphone 7 and calculates a time value of the delay. This value is stored in a FIFO memory in the audio control unit 3 and is used to control a delay unit 8 incorporated in the circuit of the locally produced sound channel. In this way, the locally reproduced sound gets the same delay as the remotely produced delay and the calibration is done.

In case of multichannel audio the delay of the various channels reproduced remotely consists of one part caused in the master device and one part caused in the slave device. While the part of delay caused in the master device is the same for all channels, the parts of the delay in the slave devices may differ. In this case the delay may be averaged for all the channels and this value is stored in the FIFO memory.

In an alternative embodiment, the delays in the slave devices are calculated individually for each channel at the master device. Also, the delays between the slave devices may be measured by means of their respective microphones. In each slave device the local delay is adjusted by means of the delay unit of the respective slave device. By correlating the measured delays between several devices, between master and slaves as well as between different slave devices, it is possible to determine the relative positions between the devices and calculate suitable delays to be set at respective devices. In this way it is possible to obtain an optimal listening spot. This may be at a selected location, not necessarily at the master device.

The master device may be set in master mode or slave mode. The master and slave devices may further be set so that the channels reproduced locally and remotely, respectively, may be selected in accordance with the respective relative physical positioning of the devices. In case of stereo sound, the master may be set as left channel and the slave as right channel, or vice versa. In case of multichannel audio, the master device can have the capacity to determine the relative positions of the master and slave devices, and then automatically arrange the distribution of the channels to the respective devices.

The invention may be implemented by various combinations of hardware and software as will be appreciated by a person skilled in the art. The scope of the invention is only limited by the claims below.

## Claims

1. A method for producing multichannel audio, comprising the steps of:
playing back a sound track containing multichannel audio from an audio player (2) located in a master device;
separating one channel of the multichannel audio;
reproducing the sound of the separated one channel of the multichannel audio locally in the master device;
transmitting the other channels of the multichannel audio to remote slave devices, each channel to a separate slave device;
reproducing the sound of each of the other channels remotely, each in its respective separate slave device.

2. A method according to claim 1, wherein the other channels of the multichannel audio are transmitted by means of a radio link (5, 6).

3. A method according to claim 2, wherein the radio transmission (5, 6) utilizes a Bluetooth™ link.

4. A method according to any one of claims 1, 2 or 3, wherein the sound reproduction is calibrated with regard to delays.

5. A method according to claim 4, wherein the calibration is performed by transmitting a calibration signal over the radio link (5, 6), reproducing the sound of the calibration signal at a remote slave device, picking up the sound of the calibration signal at the local master device, measuring the delay between the original calibration signal and the sound of the calibration signal, and delaying the local sound reproduction of the separated one channel in the master device.

6. A method according to claim 5, wherein the calibration involves a plurality of slave devices and the local sound reproduction is delayed with an average of the measured delays.

7. A method according to claim 5, wherein the calibration involves a plurality of slave devices and the respective local sound reproduction is delayed with a value based on delays measured individually for each slave device.

8. A method according to any one of claims 1 to 7, wherein the determination of what channels of the multichannel audio are to be separated in the master device and to be transmitted to the respective slave devices, is performed in dependence of the relative physical location between the master device and the slave devices.

9. A method according to claim 8, wherein the multichannel audio consists of left and right stereo channels, and the left channel is reproduced by the master device and the right channel is reproduced by a slave device, or vice versa.

10. A method according to claim 8, wherein the relative physical location between the master device and the slave devices is determined by the master device, and the distribution of the channels to the respective devices is arranged automatically.

11. A device for producing multichannel audio, comprising:
a player (2) for playing back a sound track containing multichannel audio;
**characterised by**:
a control means (3) for separating one channel of the multichannel audio;
a sound reproduction system (4) for reproducing the sound of the separated one channel of the multichannel audio;
transmission means (5, 6) for transmitting the other channels of the multichannel audio to remote slave devices.

12. A device according to claim 11, wherein the transmission means comprises a radio link (5, 6).

13. A device according to claim 12, wherein the radio link (5, 6) is a Bluetooth™ link.

14. A device according to claims 11, 12 or 13, wherein the device (1) further comprises a calibration means (3) for calibration of the sound reproduction with regard to a delays.

15. A device according to claim 14, wherein the calibration means (3) is adapted to perform the calibration by transmitting a calibration signal over the radio link (5, 6), whereby the sound of the calibration signal is reproduced at a remote slave device, picking up the sound of the calibration signal, measuring the delay between the original calibration signal and the sound of the calibration signal, and delaying the sound reproduction of the separated one channel.

16. A device according to claim 15, wherein the calibration means (3) is adapted to involve a plurality of slave devices and the local sound reproduction is delayed with an average of the measured delays.

17. A device according to claim 15, wherein the calibration means (3) is adapted to involve a plurality of slave devices and the local sound reproduction is delayed with a value based on delays measured individually for each slave device.

18. A device according to any one of claims 11 to 17, wherein the control means (3) is adapted to be set to select what channels of the multichannel audio are to be separated and to be transmitted to the respective slave devices.

19. A device according to claim 18, wherein the multichannel audio consists of left and right stereo channels, and the control means (3) is adapted to be set to separate the left channel and to transmit the right channel to a slave device, or vice versa.

20. A device according to claim 18, wherein the master device is adapted to determine the relative physical location between the master device and the slave devices, and to arrange the distribution of the channels to the respective devices automatically.

21. A device according to any one of claims 11 to 20, wherein the device (1) comprises reception means (5, 6) adapted to receive one channel of the multichannel audio, and the control means (3) is adapted to command the sound reproduction system (4) to reproduce the sound of the received one channel.

22. A device according to claim 21, wherein the reception means comprises a radio link (5, 6).

23. A device according to claim 22, wherein the radio link (5, 6) is a Bluctooth™ link.

24. A device according to any one of claims 11 to 23, wherein the device (1) is an audio player, a portable telephone, a pager, a communicator, a smart phone or an electronic organiser.
